Europäisches Patentamt

European Patent Office

Office européen des brevets

(11) Veröffentlichungsnummer: **0 407 991 A1**

## (12) EUROPÄISCHE PATENTANMELDUNG

(21) Anmeldenummer: **90113206.8**

(22) Anmeldetag: **11.07.90**

(51) Int. Cl.5: **A01K 91/10**

(30) Priorität: **13.07.89 DE 3923161**

(43) Veröffentlichungstag der Anmeldung:
**16.01.91 Patentblatt 91/03**

(84) Benannte Vertragsstaaten:
**AT BE CH DE DK ES FR GB GR IT LI LU NL SE**

(71) Anmelder: **Schmiegel, Hubert**
**Maystrasse 6**
**D-8480 Weiden(DE)**

Anmelder: **Moller, Robert**
**Am Walpenweiher 1**
**D-8481 Schwarzenbach(DE)**

(72) Erfinder: **Schmiegel, Hubert**
**Maystrasse 6**
**D-8480 Weiden(DE)**
Erfinder: **Moller, Robert**
**Am Walpenweiher 1**
**D-8481 Schwarzenbach(DE)**

(74) Vertreter: **Merten, Fritz**
**Tristanstrasse 5**
**D-8500 Nürnberg 40(DE)**

(54) **Vorrichtung zum Angeln von Fischen.**

(57) Bei einer Vorrichtung zum Angeln von Fischen unter Verwendung einer Angelschnur und einem an der Angelschnur angeordneten Fanghaken, ist zu einfachen und sicheren Angelvorgängen, in der Angelschnur (1) im Abstand des Fanghakens (8) ein mit der Angelschnur (1) fest verbundener Abschnitt (4) aus einem starren Werkstoff ausgebildet, der ein zwischen einer Ruhe- und einer Spannstellung ausziehbares federnd elastisches Spannelement (5) trägt, das mit dem einem Ende oben am Abschnitt (4) festgelegt und mit dem anderen Ende in der Spannstellung unmittelbar oder mittelbar am unteren Ende des Abschnitts (4) freigebbar arretierbar ist und daß weiter das arretierbare Ende des Spannelements (5) unter dem Einfluß einer am Fanghaken (8) wirksamen Zugkraft vom Abschnitt aus der Spannstellung in die selbsttätig ruckartig aus der Spannstellung in die Ruhestellung zurückführbar ist wobei mit dem arretierbaren Ende (4') des Spannelements (4) der Fanghaken (8) verbunden ist.

Fig.1

# VORRICHTUNG ZUM ANGELN VON FISCHEN

Bei Angelvorgängen ist es bekannt den Fisch nach erfolgtem Anbeißen durch hochreißen der Angelschnur anzuhauen. Dabei wird der Fanghaken in die Randbereiche des Fischmauls eingetrieben und der Fisch unverlierbar mit der Angelvorrichtung in Verbindung gebracht. Das manuelle Anhauen des Fisches erweist sich jedoch als umständlich und zeitaufwendig sowie nicht sicher. Außerdem erfordert das bekannte Anhauen die permanente Beobachtung der Angelvorrichtung durch den Angler, was sich für den Angelvorgang ungünstig auswirkt.

Es ist Aufgabe der Erfindung, das Angeln von Fischen einfacher und sicherer zu machen.

Der Erfindung gemäß ist diese Aufgabe dadurch gelöst, daß in der Angelschnur im Abstand des Fanghakens ein mit der Angelschnur fest verbundener Abschnitt aus einem starren Werkstoff ausgebildet ist, der ein zwischen einer Ruhe- und einer Spannstellung ausziehbares federnd elastisches Spannelement trägt, das mit einem Ende oben am Abschnitt festgelegt und mit dem anderen Ende in der Spannstellung unmittelbar oder mittelbar am unteren Ende des Abschnitts freigebbar arretierbar ist, daß das arretierte Ende des Spannelements unter dem Einfluß einer am Fanghaken wirksamen Zugkraft vom Abschnitt lösbar und durch Vorspannung selbsttätig ruckartig aus der Spannstellung in die Ruhestellung zurückführbar ist und daß mit dem arretierbaren Ende des Spannelements der Fanghaken verbunden ist. Zweckmäßig ist der Fanghaken über ein Schnurstück und einen Wirbelkörper mit dem arretierbaren Ende des Spannelements in Verbindung gebracht. Auf diese Weise ist erreicht, daß die Fische beim Versuch, den Köder vom Fanghaken abzureißen den Anhauvorgang selbsttätig auslösen, bei dem dann der Fanghaken in die Randbereiche des Fischmauls eingetrieben wird. Die kurze Reaktionszeit der Vorrichtung stellt dabei sicher, daß der Fisch unverlierbar an der Angelschnur verbleibt und daß das übliche Verschlucken des Fanghakens durch den Fisch unterbleibt. Hierdurch vollzieht sich der Angelvorgang selbständig, schnell und sicher und läuft humaner ab. Außerdem wird vermittels der Vorrichtung der Wirkungsgrad des Angelvorgangs verbessert.

In Ausgestaltung der Vorrichtung ist vorgesehen, daß der aus einem starren Werkstoff gebildete Abschnitt durch ein Rohrstück gebildet ist. Das Rohrstück kann dabei aus einem beliebigen Werkstoff, bevorzugt aus einem Nichteisenmetall oder einem Kunststoff gebildet sein.

Weiter trägt das Rohrstück im Bereich seines oberen Endes einen Quersteg, an den die Angelschnur unter Zwischenfügung eines Wirbelkörpers und das obere Ende des Spannelements festgelegt sind. Als Spannelement kann vorteilhaft ein Streifenteil oder ein Ring aus einem elastischen Werkstoff dienen. Es ist jedoch auch möglich das Spannelement anderweitig beliebig, z. B. durch eine Schraubenf eder zu bilden.

Fernerhin ist vorgesehen, daß das Schnurstück zwischen Wirbelkörper und Fanghaken einen Rastenkörper abstützt und daß nach Einhängen des Schnurstücks in eine Schlitzung am unteren Ende des Rohrstücks, der Rastenkörper an den Begrenzungsflächen der Schlitzung zur Arretierung des Spannelements in der Spannstellung abstützbar ist. Als Schlitzung kann bevorzugt eine am freien stirnseitigen Ende des Rohrstücks angeordnete axiale Schlitzung oder eine Kerbe dienen. Als zweckmäßig hat sich erwiesen, wenn Schlitzungen oder Kerben mit verschieden großen Längen im Rohrstück ausgebildet sind. Hierdurch ist die Empfindlichkeit der Vorrichtung veränderbar dergestalt, daß bei kurzen Schlitzungen oder Kerben eine geringere zugkraft zum Aufheben der Verrastung des Spannelements ausreicht, während Schlitzungen oder Kerben mit größerer Länge auch größere Zugkräfte erfordern, wodurch die Rastwirkung gegebenenfalls den zu angelnden Fischgrößen anpaßbar ist.

Der Rastenkörper kann gemäß weiterer Ausführung der Vorrichtung durch einen kugeligen Körper aus einem Werkstoff mit großem spezifischen Gewicht gebildet sein, der zweckmäßig frei verschieblich auf dem Schnurstück aufgebracht und auf einem im Schnurstück angeordneten Schnurknoten auf legbar ist. Als geeigneter Werkstoff für den kugeligen Körper kann Blei in Anwendung kommen. Der kugelige Körper übt eine Doppelwirkung dahingehend aus, daß er einerseits als Teil der Arretierung für das Spannelement wirkt und zum anderen durch sein Gewicht für eine senkrechte Abführung von Schnur und Fanghaken sorgt.

In den Figuren ist die Vorrichtung anhand eines Ausführungsbeispiels verdeutlicht. Hierin bedeuten:

Fig. 1 eine Vorrichtung im Schnitt,

Fig. 2 eine Vorrichtung in Vorderansicht und

Fig. 3 ein Teilstück einer Vorrichtung in Seitenansicht.

In den Fig. ist mit 1 eine an sich bekannte Angelschnur bezeichnet, die in ebenfalls bekannter Weise auf einem Wickel eines Angelstocks (nicht gezeigt) geführt ist.

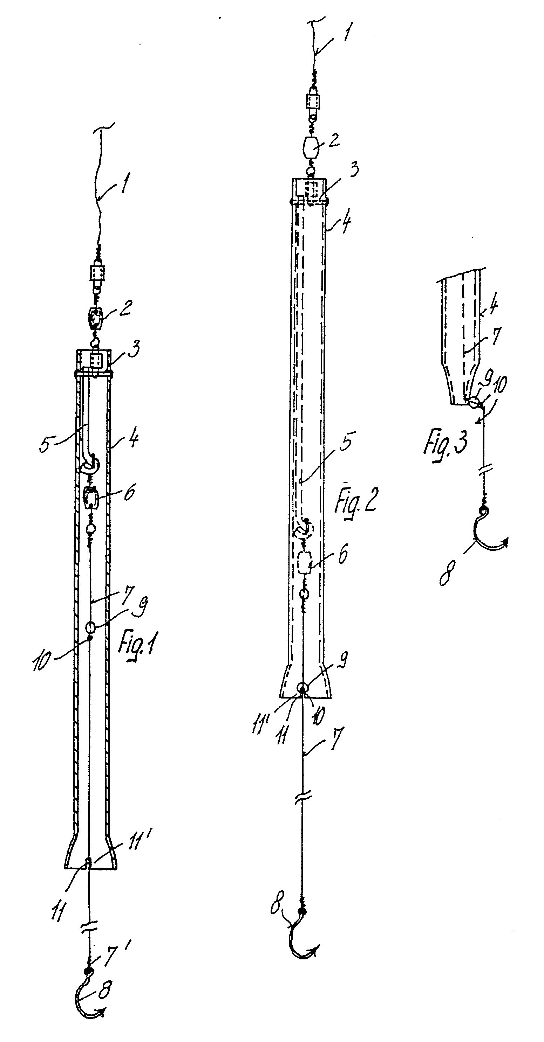

An der Angelschnur 1 greift ein Wirbelkörper 2 an, der an einem Quersteg 3 eines Rohrstücks 4 festgelegt ist. Das Rohrstück 4 ist aus einem starren Werkstoff, beispielsweise einem metallischen Werkstoff oder einem Kunststoff gebildet. Auf den Quersteg 3 ist ferner ein ringförmiges Spannelement 5 aufgebracht, dessen freies diametrales Ende einen weiteren Wirbelkörper 6 hält, an dem ein Schnurstück 7 angreift, dessen freies Ende 7' den Fanghaken 8 trägt. Das Schnurstück 7 nimmt einen kugeligen Rastenkörper 9 auf, der sich auf einem Knoten 10 des Schnurstücks 7 abstützt. Das untere Ende des Rohrstücks 4 ist durch Verquetschen verbreitert und mit mindestens einer Schlitzung 11 versehen. In der Schlitzung 11 ist das Schnurstück 7 führbar, wobei die äußeren Begrenzungsflächen 11' der Schlitzung 11, wie in den Fig. 2 und 3 erkennbar, als Stützflächen für den kugeligen Rastenkörper 9 wirken.

In der Fig. 1 nimmt das Spannelement 5 die Ruhestellung ein. In dieser Stellung sind der Wirbelkörper 6 ganz, das Schnurstück 7 teilweise in das Rohrstück 4 eingezogen und der Fanghaken 8 dem Rohrstück 4 angenähert gehalten. Die Vorrichtung ist, wie in Fig. 2 und 3 erkennbar, zum Fangen von Fischen dadurch vorzubereiten, daß durch den Einsatz einer Zugkraft am Schnurstück 7 das Spannelement 4 ausgezogen wird und durch Abstützen des kugeligen Rastenkörpers 9 an den Begrenzungsflächen 11' der Schlitzung 11 in der Spannstellung gehalten wird. Das Spannelement 4 bedarf in dieser Stellung die Anwendung geringer Zugkräfte am Fanghaken 8 um durch abheben des kugeligen Rastenkörpers 9 von den Begrenzungsflächen 11' der Schlitzungen 11 frei zu sein und durch Vorspannung ruckartig aus der Stellung der Fig. 2 bzw. 3 in die Stellung der Fig. 1 rückgeführt zu werden um dabei eine Anhaubewegung auf den Fanghaken 8 und weiter auf einen Fisch zu legen. Die so erzielte Aufhebung der Arretierung erfolgt durch den Angelhaken zur Abnahme des Köders manipulierenden Fisch selbsttätig. Hierbei reichen bereits geringe Zugkräfte am Fanghaken 8 aus. Während beim Ausführungsbeispiel die Schlitzung 11 mit geringer Länge ausgeführt ist, besteht auch die Möglichkeit eine Schlitzung 11 mit größerer axialer Länge zu wählen. In diesem Falle werden zur Lösung der Arretierung am Fanghaken größere Kräfte benötigt, wodurch die Angelvorrichtung entsprechend der gewählten Schlitzung 11 zum Fangen von größeren oder kleineren Fischen geeignet ist.

**Ansprüche**

1. Vorrichtung zum Angeln von Fischen unter Verwendung einer Angelschnur und einem an der Angelschnur angeordneten Fanghaken,
**dadurch gekennzeichnet,**
daß in der Angelschnur (1) im Abstand des Fanghakens (8) ein mit der Angelschnur (1) fest verbundener Abschnitt (4) aus einem starren Werkstoff ausgebildet ist, der ein zwischen einer Ruhe- und einer Spannstellung ausziehbares federnd elastisches Spannelement (5) trägt, das mit einem Ende oben am Abschnitt (4) festgelegt und mit dem anderen Ende in der Spannstellung unmittelbar oder mittelbar am unteren Ende des Abschnitts (4) freigebbar arretierbar ist, daß das arretierte Ende des Spannelements (5) unter dem Einfluß einer am Fanghaken (8) wirksamen Zugkraft vom Abschnitt (4) lösbar und durch Vorspannung selbsttätig ruckartig aus der Spannstellung in die Ruhestellung zurückführbar ist und daß mit dem arretierbaren Ende (4') des Spannelements (4) der Fanghaken (8) verbunden ist.

2. Vorrichtung nach Anspruch 1,
**dadurch gekennzeichnet,**
daß der Fanghaken (8) vermittels eines Schnurstücks (7) und eines Wirbelkörpers (6) mit dem arretierbaren Ende des Spannelements (5) fest verbunden ist.

3. Vorrichtung nach Anspruch 1,
**dadurch gekennzeichnet,**
daß der aus einem starren Werkstoff gebildete Abschnitt (4) durch ein Rohrstück gebildet ist.

4. Vorrichtung nach Anspruch 3,
**dadurch gekennzeichnet,**
daß das Rohrstück (4) aus einem Nichteisenmetall gebildet ist.

5. Vorrichtung nach Anspruch 3,
**dadurch gekennzeichnet,**
daß das Rohrstück (4) aus einem Kunststoff gebildet ist.

6. Vorrichtung nach Anspruch 1 und 2,
**dadurch gekennzeichnet,**
daß das Rohrstück (4) im Bereich des oberen Endes einen Quersteg (3) fest trägt, an dem die Angelschnur (1) unter Zwischenfügung des Wirbelkörpers (2) und das obere Ende des Spannelements (5) festgelegt sind.

7. Vorrichtung nach Anspruch 1 und 6,
**dadurch gekennzeichnet,**
daß das Spannelement (5) durch einen Streifenteil oder einen Ring aus einem federnd elastischen Werkstoff gebildet ist.

8. Vorrichtung nach Anspruch 1 und 6,
**dadurch gekennzeichnet,**
daß das Spannelement (5) durch eine Schraubenfeder gebildet ist.

9. Vorrichtung nach Anspruch 1,
**dadurch gekennzeichnet,**
daß das Schnurstück (7) zwischen Wirbelkörper (6) und Fanghaken (8) einen Rastenkörper (9) abstützt und daß nach Durchführung des Schnurstücks in einer Schlitzung (11) am unteren Ende des Rohrstücks (4), der Rastenkörper (9) an den Begrenzungsflächen (11') der Schlitzung (11) zur Arretierung des Spannelements (5) in der Spannstellung abstützbar ist.

10. Vorrichtung nach Anspruch 9,
**dadurch gekennzeichnet,**
daß die Schlitzung (11) durch eine am freien stirnseitigen Ende des Rohrstücks (4) angeordnete axiale Schlitzung gebildet ist.

11. Vorrichtung nach Anspruch 10,
**dadurch gekennzeichnet,**
daß Schlitzungen (11) mit verschieden großen Längen im Rohrstück (4) ausgebildet sind.

12. Vorrichtung nach Anspruch 9,
**dadurch gekennzeichnet,**
daß der Rastenkörper (9) durch einen kugeligen Körper aus einem Werkstoff mit großem spezifischen Gewicht gebildet ist, der frei verschieblich auf dem Schnurstück (7) aufgebracht und auf einen im Schnurstück (7) angeordneten Schnurknoten auflegbar ist.

Fig.1

Fig.2

Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3660922 (CHILL) <br> * das ganze Dokument * | 1, 2, 3, 5, 6, 8-11 | A01K91/10 |
| A | | 12 | |
| | --- | | |
| X | FR-A-710595 (VAN LEEMPUTTEN) <br> * das ganze Dokument * | 1, 3, 4, 8 | |
| | --- | | |
| A | FR-A-1097052 (PIERLOT) <br> * das ganze Dokument * | 1, 7 | |
| | --- | | |
| X | US-A-3823501 (BYBEE) <br> * das ganze Dokument * | 1, 3, 8 | |
| A | | 6 | |
| | --- | | |
| A | US-A-3771250 (HELMKE) | | |
| | --- | | |
| A | US-A-3766679 (NOE) | | |
| | --- | | |
| A | US-A-3702512 (HODSHIRE) | | RECHERCHIERTE SACHGEBIETE (Int. Cl.5) |
| | --- | | |
| A | US-A-3703781 (WALKER) | | A01K |
| | --- | | |
| A | FR-A-952739 (MOREAU) | | |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 18 SEPTEMBER 1990 | VERDOODT S.J.M. |